(19) Europäisches Patentamt
European Patent Office
Office européen des brevets

(11) **EP 2 191 732 A1**

(12) **EUROPEAN PATENT APPLICATION**

(43) Date of publication:
**02.06.2010 Bulletin 2010/22**

(51) Int Cl.:
*A23K 1/16* (2006.01)   *A23K 1/18* (2006.01)
*A23K 1/00* (2006.01)

(21) Application number: **10154060.7**

(22) Date of filing: **04.04.2006**

(84) Designated Contracting States:
**AT BE BG CH CY CZ DE DK EE ES FI FR GB GR HU IE IS IT LI LT LU LV MC NL PL PT RO SE SI SK TR**

(30) Priority: **02.03.2006 US 366234**
**11.04.2005 US 670151 P**

(62) Document number(s) of the earlier application(s) in accordance with Art. 76 EPC:
**06749279.3 / 1 868 447**

(71) Applicant: **THE IAMS COMPANY**
**Dayton, Ohio 45414 (US)**

(72) Inventors:
• **Boileau, Thomas William Maxwell**
**Galloway OH 43119 (US)**
• **Stojanovic, Markko**
**Cincinnati OH 45242 (US)**
• **Sunvold, Gregory Dean**
**45338 OH Lewisburgh (US)**

(74) Representative: **Kellenberger, Jakob**
**NV Procter & Gamble**
**Services Company S.A.**
**Intellectual Property Department**
**Temselaan 100**
**1853 Strombeek-Bever (BE)**

Remarks:
This application was filed on 19-02-2010 as a divisional application to the application mentioned under INID code 62.

(54) **Pet food compositions comprising two components**

(57) Pet food compositions comprising a first component comprising a source of protein, a source of fat, and a source of carbohydrate, and a second component comprising a biologic selected from the group consisting of a probiotic component; yeast; enzymes; antibodies; immunoglobulins; cytokines; and combinations thereof are useful for providing pet food compositions that are sufficiently stable such that effective amounts of the biologic are present in the pet food compositions at the time of ingestion by a pet.

**Description**

FIELD OF THE INVENTION

The present invention relates to pet food compositions comprising two components, wherein the first component comprises a source of protein, a source of fat, and a source of carbohydrate and the second component comprises a probiotic component. The present invention is particularly useful for providing pet food compositions that are sufficiently stable such that probiotic microorganisms are present in the compositions at the time of ingestion by a pet.

BACKGROUND OF THE INVENTION

Pet food compositions containing probiotic microorganisms would be desirable in the art. While various commercial attempts have been made to achieve such compositions, many of these do not provide sufficient efficacious levels of viable probiotic microorganism due to issues associated with susceptibility of the microorganism to standard commercial pet food manufacturing procedures such as extrusion. For example, efforts of coating or filling standard pet food kibbles with probiotic microorganisms have been suggested but, in practice, often prove impractical. To avoid issues associated with standard commercial pet food manufacture, other manufacturers may provide jars of probiotic microorganism powder for sprinkling on standard pet foods. However, this raises issues of convenience and compliance such that still further development in this area is necessary to achieve an efficacious pet food composition that will be successful in the marketplace and gain widespread use among guardians of pets.

US2005/0276882 relates to a pet food comprising kibbles and pellets, wherein the pellets contain heat sensitive ingredients. The pellets are made in a relatively low temperature process. US6254910 relates to a multi-component food product comprising a cream-textured matrix having sensitive ingredients, encapsulated by a second, carbohydrate based component. US5968569 describes pet food products based on dry cereal products as a matrix that contain probiotic micro-organisms. US 2003/0026876 discloses a multi-component pet food.

SUMMARY OF THE INVENTION

The present invention relates to a pet food composition comprising: a first component comprising a source of protein, a source of fat, and a source of carbohydrate; and a second component, physically distinct from the first component; and wherein the first component is at least partially extruded and wherein the second component has water activity of 0.2 or less; and wherein the second component comprises comprises a biologic selected from the group consisting of a probiotic component having a viable probiotic microorganism count of at least $10^5$ CFU / gram of second component; yeast; enzymes; antibodies; immunoglobulins; cytokines; and combinations thereof and wherein the first component is provided as a plurality of discrete masses and the second component is provided as a plurality of discrete masses.

The present invention further relates to methods of prophylactic, therapeutic treatment or non-therapeutic treatment to alleviate diseases or conditions that affect the pet comprising administration of a composition as described herein.

DETAILED DESCRIPTION OF THE INVENTION

All percentages and ratios are calculated by weight unless otherwise indicated. All percentages and ratios are calculated based on the total composition unless otherwise indicated.

As used herein, the term "pet" means a domestic animal including, but not limited to domestic dogs, cats, horses, cows, ferrets, rabbits, pigs, and the like. Domestic dogs and cats are preferred herein.

As used herein, the term "pet food composition," means a composition that is intended for ingestion by the pet. Pet food compositions may include, without limitation, nutritionally balanced compositions suitable for daily feed, as well as supplements (*e.g.*, treats) which may or may not be nutritionally balanced.

As used herein, the term "viable probiotic microorganism" or the like means a probiotic microorganism in its live state, which by definition herein includes but is not limited to those in the dormant state and spores.

*Compositions of the Present Invention*

The present invention relates to pet food compositions that may be sufficiently stable such that a biologic is present in the compositions at the time of ingestion by a mammal, thereby maintaining activity of the composition. A pet food composition comprising: a first component comprising a source of protein, a source of fat, and a source of carbohydrate; and a second component, physically distinct from the first component; and wherein the first component is at least partially extruded and wherein the second component has water activity of 0.2 or less; and wherein the second component comprises a biologic selected from the group consisting of a probiotic component having a viable probiotic microorganism count of at least $10^5$ CFU / gram of second component; yeast; enzymes; antibodies; immunoglobulins; cytokines; and combinations thereof and wherein the first component is provided as a plurality of discrete masses and the second component is provided as a plurality of discrete masses.

The pet food composition may be of any form that is orally administrable. Pet food compositions are readily understood in the art, for example, dry foods (*e.g.*, at least partially extruded kibbles) and less brittle foods (*e.g.*, semi-moist foods), or mixtures thereof. In one embodiment of the present invention, the pet food composition is a mixture of a dry food (the first component) and a less brittle food (the second component, by virtue of the lipid component therein).

The first component and the second component of the composition are physically distinct components (for example, the first component and the second component are not associated together as are the "softer lipid based portion" and "shell or harder matrix material portion" of the dual texture component of U.S. Patent No. 6,254,910). The pet food composition may be provided as any of a variety of different presentations of the first component and the second component. For example, the pet food composition may be provided as a mixture of the first component and the second component; to illustrate, the first component may be provided as a plurality of kibbles (that are at least partially extruded) while the second component may be provided as a plurality of pellets, wherein the composition is provided as a heterogeneous mixture of kibbles and pellets.

The pet food compositions, or components thereof, may or may not be nutritionally balanced. As used herein, the term "nutritionally balanced," with reference to the pet food composition or a component thereof, means that the composition or component has known required nutrients to sustain life in proper amounts and proportion based on recommendations of recognized authorities in the field of pet nutrition, except for the additional need for water.

*The First Component*

The first component of the pet food compositions of the present invention comprises a source of protein, a source of fat, and a source of carbohydrate. The first component I sat least partially extruded. Examples of a first component include traditional pet food compositions, such as kibbles. The first component itself may be, or may not be, nutritionally balanced. In one embodiment, the first component is nutritionally balanced.

In one embodiment, the first component may comprise, on a dry matter basis, from 20% to 50% crude protein, or from 22% to 40% crude protein, by weight of the first component. The crude protein material may comprise any material having a protein content of at least 15% by weight, Examples of which include vegetable proteins such as soybean, cottonseed, and peanut, animal proteins such as casein, albumin, and meat tissue. Examples of meat tissue useful herein include fresh meat, and dried or rendered meals such as fish meal, poultry meal, meat meal, bone meal, and the like. Other types of suitable crude protein sources include wheat gluten or corn gluten, and proteins extracted from microbial sources such as yeast.

The first component comprises a source of fat. In one embodiment, the first component may comprise, on a dry matter basis, from 5% to 35% fat, preferably from 10% to 30% fat, by weight of the first component. Sources of fat are widely known, including those delineated below with respect to the lipid component.

Grains or cereals such as rice, corn, milo, sorghum, barley, alfalfa, wheat, and the like are illustrative sources of carbohydrate. These carbohydrate sources, and typical levels thereof, are widely known in traditional pet food compositions.

A suitable process for the preparation of the first component of the pet food compositions of the present invention is at least partial extrusion, although baking and other suitable processes may be used. When extruded, the dried pet food is usually provided in the form of a kibble. A process is described in EP 0,850,569.

*The Second Component*

The second component present in the pet food compositions of the invention has a water activity of 0.2 or less. The second component comprises a biologic selected from the group consisting of a probiotic component having a viable probiotic microorganism count of at least $10^5$ CFU / gram of second component; yeast; enzymes; antibodies; immunoglobulins; cytokines, and combinations thereof.

It is found herein that such low water activity is critical for the success of the present invention. For example, without intending to be limited by theory, the low water activity may allow for maintenance of dormancy of some or all probiotic microorganisms that may be present, or otherwise preserves the integrity of the biologic. Certain commercial pet foods having higher water activities and containing probiotic microorganisms may not be stable, *i.e.*, almost all of such microorganisms may not be viable at time of commercial sale. An example of a commercial pet food containing probiotic microorganisms is BLUE (advertised for adult dogs as containing "life bits"), commercially available from The Blue Buffalo Company. Other biologics may be less well-known in pet food matrices.

The second component has a water activity of 0.2 or less, or 0.1 or less. For example, the second component may have a water activity of from 0.5 to 0.15. As used herein, the term "water activity" ($a_w$) generally refers to the amount of free water available to participate in chemical reactions. Water activity may be determined using methods known to those skilled in the art. Herein, water activity is determined using a NovaSina TH200 Water Activity Meter at 25 °C. Briefly, the meter is calibrated using calibration salts. The sample to be measured is temperature equilibrated in the meter, following which the water activity is determined as the percent relative humidity (%RH) divided by 100 after equilibrium is reached (typically 10 to 20 minutes).

The second component comprises a biologic selected from the group consisting of a probiotic component having a viable probiotic microorganism count of at least $10^5$ CFU /gram of second component; yeast; enzymes; antibodies; immunoglobulins; cytokines; and combinations thereof.

The second component may comprise a probiotic component. The probiotic component comprises one or more bacterial probiotic microorganisms suitable for pet consumption and effective for improving the microbial balance in the pet gastrointestinal tract or for another benefit, such as disease or condition relief or prophylaxis, to the pet (benefits of the present invention are described in further detail in the *Methods* section, herein below). Various probiotic microorganisms known in the art are suitable for use in the present invention. *See,* for example, WO 03/075676, Societe Des Produits Nestle, published September 18, 2003.

In one embodiment of the invention, the probiotic component is selected from the group consisting of bacteria of the genera *Bacillus, Bacteroides, Bifidobacterium, Enterococcus (e.g., Enterococcus faecium* DSM 10663), *Lactobacillus,* and *Leuconostoc,* and combinations thereof. In another embodiment of the invention, the probiotic is selected from bacteria of the genera *Bifidobacterium, Lactobacillus,* and combinations thereof.

Those of the genera *Bacillus* may form spores. In one embodiment, the probiotic component does not form a spore.

Examples of lactic acid bacteria suitable for use herein include strains of *Streptococcus lactis, Streptococcus cremoris, Streptococcus diacetylactis, Streptococcus thermophilus, Lactobacillus bulgaricus, Lactobacillus acidophilus (e.g., Lactobacillus acidophilus strain* DSM 13241), *Lactobacillus helveticus, Lactobacillus bifidus, Lactobacillus casei, Lactobacillus lactis, Lactobacillus plantarum, Lactobacillus rhamnosus, Lactobacillus delbruekii, Lactobacillus thermophilus, Lactobacillus fermentii, Lactobacillus salivarius, Lactobacillus reuteri, Bifidobacterium longum, Bifidobacterium infantis, Bifidobacterium bifidum, Bifidobacterium animalis, Bifidobacterium pseudolongum,* and *Pediococcus cerevisiae*, or mixtures thereof, preferably *Lactobacillus salivarius, Bifidobacterium infantis*, or mixtures thereof.

As an example, strains of *Bifidobacterium* isolated from resected and washed human gastrointestinal tract as disclosed in WO 00/42168 are preferred. For example, the *Bifidobacterium infantis* strain designated UCC35624 may be used, described as being deposited at the National Collections of Industrial and Marine Bacteria Ltd (NCIMB) on January 13, 1999, and accorded the accession number NCIMB 41003. Strains isolated from resected and washed canine or feline gastrointestinal tract may be particularly useful.

As another Example, strains of *Lactobacillus salivarius* isolated from resected and washed human gastrointestinal tract as described in WO 98/35014 are preferred. More preferred are the *Lactobacillus salivarius* strains that are designated UCC 1 and UCC 118, described as being deposited at the National Collections of Industrial and Marine Bacteria Ltd (NCIMB) on November 27, 1996, and accorded the accession numbers NCIMB 40830 and 40829, respectively.

The second component has a viable probiotic microorganism count of at least $10^5$ colony forming units (CFU) per gram of second component, or at least $10^6$ CFU per gram of second component, or at least $10^8$ CFU per gram of second component. For example, the second component may have a viable probiotic microorganism count of up to $10^{12}$ CFU per gram of second component, or up to $10^{10}$ CFU per gram of second component, or up to $10^9$ CFU per gram of second component. Enumeration as defined by CFU is determined using the method provided herein below. Advantageously, the composition provided herein comprises a second component having a shelf life of at least three months, alternatively at least six months, alternatively from three months to twenty-four months, alternatively from six months to eighteen months. As used herein, the term "shelf life" refers to that property of the second component whereby 1% or more, alternatively 5% or more, alternatively 10% or more, alternatively 25% or more, alternatively 50% or more, alternatively 75% or more, of the probiotic microorganisms of the second component are viable at the referenced time period after exposure to ambient environmental conditions.

The second component may comprise yeast. Any of a variety of yeast may be utilized, and will be well-known in the art, such as those of the *Saccharomyces* genera (including, for example, *Saccharomyces cervisiae* (sometimes referred to as "Baker's yeast"), and *Candida utilis* (which may also be referred to as *Torulopsis utilis*). As used herein, yeast includes but is not limited to those incorporating one or more components incorporated from the environmental media upon which it is cultivated, such as mineral-enriched yeast. Various fermentation processes are well-known in the art.

The second component may comprise one or more enzymes. For example, upon heating or other harsh processing conditions, enzymes may become denatured thereby losing biological activity. Enzymes particularly include those having beneficial biological activity in a pet, such as digestive or other therapeutic enzymes. Examples include proteases, collagenases, lipases, amylases, cellulases, lysozymes, candidases, lactases, kinases, invertases, galactosidases, pectinases, ribonucleases (including deoxyribonucleases) and combinations thereof.

The second component may comprise one or more antibodies. Antibodies to viruses, pathogenic bacteria, parasites, or the like are preferred for use herein. Examples include antibodies to feline rhinotracheitis, feline panleukopenia, feline calicivirus, feline pneumonitis, feline leukemia, canine distemper, canine parvovirus, coronavirus, *Borrelia burgdorferi* (Lyme Disease), *toxoplasma gondii, E. coli,* campylobacter, salmonella, clostridia, bacteriodes, giardia, tapeworm, roundworm, coccidian, cryptosporidium, and combinations thereof.

The second component may comprise one or more immunoglobulins. Examples include immunoglobulin A (IgA), immunoglobulin M (IgM), immunoglobulin G (IgG), and combinations thereof.

The second component may comprise one or more cytokines. Examples include transforming growth factor beta (TGF-beta), interleukin-4, interleukin-10, interleukin-12, and combinations thereof.

As other examples, the second component may comprise at least 0.001 %, alternatively at least 0.01%, alternatively at least 0.1%, alternatively at least 0.5%, and alternatively at least 1% of the biologic, by weight of the second component. As further examples, the second component may comprise 99% or less, alternatively 75% or less, alternatively 50% or less, alternatively 25% or less, alternatively 10% or less, and alternatively 5% or less of the biologic, by weight of the second component.

In one embodiment herein, the second component is a coated component, *i.e.*, a component comprising a core and a coating at least partially surrounding the core. In one such embodiment, the core comprises at least a portion of the probiotic component and the coating comprises any of a variety of typically coating materials. For example, the coating may comprise a lipid component or a sweetener component (both of which are illustrated herein below for convenience). For example, the coating may comprise a sweetener component comprising sucrose, similar to coatings on standard candies and other like materials.

The pet food compositions of the present invention comprise both the first component and the second component. In one embodiment of the invention, the first component and the second component may be present at a ratio of at least 2:1, or at least 5:1, or at least 10:1, all by weight. In another embodiment of the invention, the first component and the second component may be present at a ratio of from 2:1 to 50:1, or from 5:1 to 25:1, or from 10:1 to 20:1, all by weight. In preferred embodiment the first component is provided as a plurality of discrete masses (*e.g.*, at least partially extruded kibbles) and the second component is provided as a plurality of discrete masses (*e.g.*, semi-solid masses).

In this embodiment, the units of discrete masses of the first component and the second component may be present at a ratio of at least 2:1, or at least 5:1, or at least 10:1. In another embodiment of the invention, the units of discrete masses of the first component and the second component may be present at a ratio of from 2:1 to 50:1, or from 5:1 to 25:1, or from 10:1 to 20:1.

*Other Optional Components*

In addition to the required components for the first component and the second component, the first component may contain optional components such as any of those described for the second component; similarly, the second component may contain optional components such as any of those described for the first component. Notwithstanding, the first component and the second component are compositionally distinct.

The pet food compositions may comprise one or more other components suitable for a pet food composition. Such optional components may be present in the first component, the second component, or an even further distinct component not explicitly described herein. Illustrative optional components are described as follows:

In one embodiment, the composition may comprise a lipid component, which may be useful for enhancement of probiotic component stability; while the first component requires a source of fat, the lipid component may also advantageously provided in the second component. The lipid component may be any component comprising a source of fat, defined herein to be inclusive of, for example, wax, fat, fatty acid, and lipid. Specific examples of wax, fat, fatty acid, or lipid may often be interchangeable in accordance with nomenclature common in the art; for example, a lipid may often also be characterized as a fat. The inventors herein do not intend to be limited by any particular designation of nomenclature, and classifications of a particular material as a wax, fat, fatty acid, lipid, or the like is made for purposes of convenience only.

For example, the lipid component may comprise a fat which is a cocoa butter component; as defined herein the cocoa butter component comprises one or more of cocoa butter, a cocoa butter extender, a cocoa butter replacer, or a cocoa butter substitute. A given fat may be classified as one of a cocoa butter extender, cocoa butter replacer, or cocoa butter substitute, or sometimes may be classified as two or more of a cocoa butter extender, cocoa butter replacer, and cocoa butter substitute. Where used, each of the cocoa butter extender, cocoa butter replacer, and cocoa butter substitute may be one particular fat within the referenced class or any mixtures of such fats.

Cocoa butter is commonly known in the art and may generally refer to the fat from cocoa beans used to prepare chocolate. Cocoa beans are obtainable from the pods of cacao trees (*e.g., Theobroma cacao*).

The cocoa butter component may additionally or alternatively comprise a cocoa butter extender. These extenders are also commonly known in the art, and may generally refer to other fats having solid fat index (SFI) profiles which are similar to cocoa butter. Cocoa butter extenders may comprise fat containing $C_{16}$ or $C_{18}$ fatty acids, or combinations thereof. Palm oil, shea oil, illipe butter, cottonseed oil, and soybean oil, including fractionated and/or partially hydrogenated forms, are Examples of cocoa butter extenders.

The cocoa butter component may additionally or alternatively comprise a cocoa butter replacer. These replacers will also be commonly known in the art, and may generally refer to fats having melting or other properties, or structures, similar to those of cocoa butter, which are based on non-lauric fats (*e.g.*, $C_{16}$ or $C_{18}$). These include vegetable oils such as palm oil, cottonseed oil, soybean oil, and rapeseed oil, including fractions and/or partially hydrogenated forms thereof. One example is ASTRAL® R (partially hydrogenated vegetable oil (soybean oil and cottonseed oil), commercially available from Humko Oil Products, Cordova, TN).

The cocoa butter component may additionally or alternatively comprise a cocoa butter substitute. These substitutes will also be commonly known in the art, and may generally refer to hard fats having melting or other properties, or structures, similar to those of cocoa butter, but which are based on lauric fats ($C_{12}$). Such cocoa butter substitutes may tend to have melting points higher than that of cocoa butter, making these substitutes interesting for imparting heat resistance to compositions. These include vegetable oils such as palm kernel oil and coconut oil, including fractions and/or partially hydrogenated forms thereof.

In one embodiment, the cocoa butter component comprises at least one lipid selected from the group consisting of soybean oil, cottonseed oil, coconut oil, rapeseed oil, palm kernel oil, fractions of the foregoing, and partially hydrogenated forms of the foregoing.

Alternatively or additionally, the lipid component may comprise an animal-derived fat component. As will be commonly known in the art, the animal-derived fat component comprises a fat derived from an animal. Examples include beef, poultry, pork, and lamb (*e.g.*, lards and tallows). Dairy fats may also be examples, including milkfat, fractionated milkfat, and butterfat.

In one embodiment, the lipid component may comprise a combination of a cocoa butter component and an animal-derived fat component at a ratio of from 5:95 to 95:5, or from 5:95 to 25:75, or from 5:95 to 50:50, all by weight. In another embodiment herein, the lipid component comprises the cocoa butter component and the animal-derived fat component at a ratio of from 20:80 to 45:55, or from 25:75 to 40:60, all by weight.

Alternatively or additionally, the lipid component may comprise a fatty acid. Illustrative sources include omega-3 or omega-6 fatty acids.

Omega-3-fatty acids are preferably derived from marine (fish) sources, including menhaden (a herring-like fish) and, as such, may be derived from such sources. Examples of omega-3-fatty acid sources include docosahexaenoic acid ("DHA") or eicosapentaenoic acid ("EPA"), such as OMEGAPURE, commercially available from Omega Protein, Inc., Houston, TX. All forms of the fatty acid are also contemplated herein. For example, DHA is often provided as a triglyceride. As such, wherein a specific fatty acid is mentioned (*e.g.*, "DHA"), such fatty acid includes the free form of the fatty acid as well as other forms such as the naturally occurring triglyceride or other form. The terms, DHA, EPA, or other specific terms are utilized for convenience as will be commonly understood in the art to include all forms of such termed material.

Omega-6-fatty acids may be utilized herein. As is well-understood in the art, omega-6-fatty acids are those fatty acid materials having a double bond positioned between the sixth and seventh carbon atoms of the fatty acid chain, when counting from the omega (distal) carbon atom of the chain.

Other examples of suitable fatty acids may include oleic acid, stearic acid, palmitic acid, and lauric acids, including suitable salts thereof. Even further examples of suitable fatty acids include esters or other derivatives thereof, such as cetyl palmitate, acetic, lactic, or citric mono- and di-glyceride fatty acids, isopropyl palmitate, isopropylmyristate, and mono-, di-, and triglycerides (some of which may also be characterized as fats).

The lipid component may comprise a mixture of omega-3-fatty acids and omega-6-fatty acids, often through utilization of various materials containing these components. Preferred compositions for use herein may be enriched in one or more specific omega-3-fatty acids or omega-6-fatty acids.

Alternatively or additionally, the compositions may comprise wax. For example, illustrative waxes include paraffin wax, beeswax (*e.g.*, white or yellow), camuba wax, candellila wax, microcrystalline wax, rice bran wax, cetyl ester wax, and emulsifying wax.

Alternatively or additionally, the compositions may comprise a polysaccharide such as shellac or chitin.

Any of a variety of other lipid sources may additionally or alternatively be utilized as part or all of the lipid component herein.

The pet food compositions may comprise a sweetener component, which may be useful for probiotic component stability. The sweetener component, as defined herein, is a monosaccharide, disaccharide, complex carbohydrate, or any mixture thereof.

In one embodiment, the pet food compositions herein comprise a monosaccharide. In one embodiment, the second component comprises the monosaccharide. The monosaccharide utilized herein is of the general formula $C_nH_{2n}O_n$, wherein n is an integer equal to or greater than 3. Examples of monosaccharides that may be used include sorbitol, mannitol, erythrose, threose, ribose, arabinose, xylose, ribulose, glucose, galactose, mannose, fructose, sorbose, and any mixture thereof. In one embodiment, the monosaccharide may include sorbitol, mannitol, glucose, mannose, fructose, and any mixture thereof. In another embodiment, the monosaccharide is sorbitol.

In one embodiment, the pet food compositions herein comprise a disaccharide. In one embodiment, the second component comprises the disaccharide. The disaccharide utilized herein is of the general formula $C_nH_{2n-2}O_{n-1}$, wherein the disaccharide has 2 monosaccharide units connected *via* a glycosidic bond. In such formula, n is an integer equal to or greater than 3. Examples of disaccharides that may be utilized herein include sucrose, maltose, lactitol, maltitol, maltulose, lactose, and any mixture thereof. In another embodiment, the monosaccharide is sucrose.

In one embodiment, the pet food compositions herein comprise a complex carbohydrate. In one embodiment, the second component comprises the complex carbohydrate. The complex carbohydrate utilized herein is an oligosaccharide, polysaccharide, and/or carbohydrate derivative, such as (for example) an oligosaccharide and/or polysaccharide. As used herein, the term "oligosaccharide" means a digestible linear molecule having from 3 to 9 monosaccharide units, wherein the units are covalently connected *via* glycosidic bonds. The polysaccharides may be linear chains or branched. Preferably, the polysaccharide has from 9 to 20 monosaccharide units. Carbohydrate derivatives, such as a polyhydric alcohol (*e.g.*, glycerol), may also be utilized as a complex carbohydrate herein.

Examples of complex carbohydrates include raffinoses, stachyoses, maltotrioses, maltotetraoses, glycogens, amyloses, amylopectins, polydextroses, and maltodextrins.

In one embodiment, the complex carbohydrate is a maltodextrin. Maltodextrins are a form of complex carbohydrate molecule which is several glucose units in length. Without intending to be limited by theory, since maltodextrins are hydrolyzed into glucose in the digestive tract, they may be utilized as an extended source of glucose. Maltodextrins may be spray-dried carbohydrate ingredients made by controlled hydrolysis of corn starch.

In one embodiment, which may be particularly advantageous to stability of the probiotic component wherein a sweetener component is utilized, the sweetener component comprises a monosaccharide, disaccharide or complex carbohydrate having a melting point of from 80 °C to 140 °C, or from 90 °C to 120 °C. Examples include monosaccharides, such as sorbitol or xylitol.

Wherein a sweetener component is utilized, as examples, the pet food compositions herein may comprise at least 0.001 %, or at least 0.1 %, or at least 1% or at least 5%, or at least 10%, or at least 20% of the sweetener component, all by weight of the composition. As further examples, the pet food compositions herein may comprise 99% or less, or 90% or less, or 95% or less, or 75% or less, or 50% or less of the sweetener component, all by weight of the composition.

The pet food compositions may comprise a component such as dried whey or other dairy by-products.

The pet food compositions may comprise a fiber. In certain embodiments, the compositions may comprise a source of supplemental fiber (i.e., fiber additional to that inherently present in, for example, sources of protein, fat, or carbohydrate).

The source of supplemental fiber may comprise a fermentable fiber. Fermentable fibers are well-known in the art. The fermentable fiber may be any fiber source which intestinal bacteria present in the animal can ferment to produce short chain fatty acids or other metabolic components. Examples of such fermentable fibers include beet pulp (from sugar beet), gum arabic, gum talha, psyllium, rice bran, carob bean gum, citrus pulp, pectin, fructooligosaccharide, mannanoligofructose, soy fiber, arabinogalactan, galactooligosaccharide, arabinoxylan, and mixtures thereof.

In general, fermentable fibers are not digested by mammals but may be metabolized by intestinal bacterial species, such as *Bifidobacterium*. However, not all intestinal bacteria can metabolize fermentable fiber. In particular, bacteria such as Salmonella, *E. coli* and Clostridia are unable to process such fiber to any meaningful degree. This preferential digestibility, which is applicable for fermentable fiber as a class, can be used to improve the overall bacterial flora in the small intestine of the pet. Because fermentable fibers will only feed "good" bacteria such as Lactobacillus and Bifidobacterium, the amounts of harmful bacteria such as Salmonella, *E. coli* and Clostridia may decrease due to a reduction in food resources. Therefore, by providing a preferred food source for beneficial bacterial species, a diet supplemented with fermentable fiber can increase "good" intestinal bacteria while reducing the amount of "bad" bacteria.

Beet pulp and fructooligosaccharide, particularly short chain oligofructose, are particularly preferred fermentable fibers for use herein. As an example, fructooliogosaccharides are naturally occurring compounds which can be found in a variety of fruits or vegetables including banana, barley, garlic, honey, onion, rye, brown sugar, tomato, asparagus, artichoke, wheat, yacon, or chicory. Fructooligosaccharide may for example be provided as chicory root, as a long chain oligofructose (*e.g.*, inulin), or as short chain oligofructose. Particularly useful herein are fructooligosaccharide comprising at least one of 1-kestose (abbreviated as $GF_2$), nystose ($GF_3$), and 1F-beta-fructofuranosylnystose ($GF_4$). While fructooligosaccharides can be extracted from plants such as those mentioned herein, they can also be formed artificially by adding one, two, or three fructose units to a sucrose molecule by a B-(2-1)-glycosidic linkage of the fructose unit(s) to the fructose unit of sucrose. As an example, fructooligosaccharides are commercially available under the tradename NUTRAFLORA from Golden Technologies Company, Incorporated (which is a short chain oligofructose comprising 1-kestose, nystose, and 1F-beta-fructofuranosylnystose. As another example, a mixture of short chain fructooligosaccharide and inulin can be PREBIO1 or a mixture of commercially available RAFTILOSE and RAFTILINE.

The fructooligosaccharide may be a short chain oligofructose, which will be well-known to those of ordinary skill in the art. Particularly useful herein are short chain oligofructose comprising 1-kestose (abbreviated as $GF_2$), nystose ($GF_3$), and 1F-beta-fructofuranosylnystose ($GF_4$). In a preferred embodiment, the short chain oligofructose comprises from 25% to 45% 1-kestose, from 25% to 45% nystose, and from 1% to 20% 1F-beta-fructofuranosylnystose, by weight of the short chain oligofructose, alternatively from 30% to 40% 1-kestose, from 50% to 60% nystose, and from 5% to 15% 1F-beta-fructofuranosylnystose, by weight of the short chain oligofructose. As an example, short chain oligofructose is commercially available under the tradename NUTRAFLORA from Golden Technologies Company, Incorporated (which is a short chain oligofructose comprising 35% 1-kestose, 55% nystose, 10% 1F-beta-fructofuranosylnystose, all by weight of the short chain oligofructose).

In an embodiment herein, the fermentable fibers may display certain organic matter disappearance percentages. In this optional embodiment, the fermentable fibers may have an organic matter disappearance (OMD) of from 15% to 60% when fermented by fecal bacteria *in vitro* over a 24 hour period. That is, from 15% to 50% of the total organic matter originally present is fermented and converted by the fecal bacteria. The organic matter disappearance of the fibers is alternatively from 20% to 50%, alternatively from 30% to 40%.

Thus, *in vitro* OMD percentage may be calculated as follows:

$$(1-((\text{OM residue} - \text{OM blank}) / \text{original OM})) \times 100$$

where OM residue is the organic matter recovered after 24 hours of fermentation, OM blank is the organic matter recovered in corresponding blank tubes (*i.e.*, tubes containing medium and diluted feces, but no substrate), and original OM is that organic matter placed into the tube prior to fermentation. Additional details of the procedure are found in Sunvold et al., J. Anim. Sci., Vol. 73, pp. 1099 - 1109 (1995).

In one embodiment herein, the compositions may comprise at least 0.25% total fermentable fiber, by weight of the composition. By "total fermentable fiber" it is meant that the referenced level is determined by adding the relative amounts of each fermentable fiber present in the composition. For example, wherein a composition comprises 1% fructooligosaccharide and 0.5% beet pulp, by weight of the composition, and no other fermentable fiber, the composition comprises 1.5% total fermentable fiber, by weight of the composition. Alternatively, the present compositions may comprise at least 0.5% total fermentable fiber, at least 1% total fermentable fiber, at least 2% total fermentable fiber, alternatively from 1% to 20% total fermentable fiber, alternatively from 1% to 10% total fermentable fiber, alternatively from 2% to 10% total fermentable fiber, or alternatively from 3% to 8% total fermentable fiber, all by weight of the pet food composition.

The compositions herein may comprise any of a variety of components that are sensitive to process conditions ordinarily attendant with manufacture of a pet food. For example, the integrity of such sensitive components may be preserved (either fully or partially). Examples of sensitive components include components that exhibit more than 10% loss (by weight) during standard extrusion processes when included within a standard, commercial pet food, alternatively more than 20% loss, alternatively more than 50% loss. Extrusion processes are well-known in the art. Included or alternative examples of sensitive components include vitamins, such as vitamin A (including forms thereof, such as beta-carotene and lycopenes), vitamin C (including forms thereof), vitamin E (including forms thereof), and the like.

*Methods of Use of the Present Invention*

The present compositions can be used to deliver benefit following oral consumption in animals, preferably a pet. This benefit generally maintains and improves the overall health of the animal. Elements of animal health and physiology that benefit, either in therapeutically relieving the symptoms of, or disease prevention by prophylaxis, or improvement of overall health, including treatment of the immune system, treatment of the gastrointestinal system, treatment of skin or coat, treatment of stress, and combinations thereof. Examples include inflammatory disorders, immunodeficiency, inflammatory bowel disease, irritable bowel syndrome, cancer (particularly those of the gastrointestinal and immune systems), otitis externa, diarrhoeal disease, antibiotic associated diarrhoea, appendicitis, autoimmune disorders, multiple sclerosis, Alzheimer's disease, amyloidosis, rheumatoid arthritis, arthritis, joint mobility, hip dysplasia, diabetes mellitus, insulin resistance, bacterial infections, viral infections, fungal infections, periodontal disease, urogenital disease, idiopathic cystitis, interstitial cystitis, surgical associated trauma, surgical-induced metastatic disease, sepsis, weight loss, weight gain, excessive adipose tissue accumulation, anorexia, fever control, cachexia, wound healing, ulcers, gut barrier infection, allergy, asthma, respiratory disorders, circulatory disorders, coronary heart disease, anaemia, disorders of the blood coagulation system, renal disease, disorders of the central nervous system, hepatic disease, ischaemia, nutritional disorders, treatment or prevention of disorders involving the hypothalamus-pituitary-adrenal (HPA) axis, osteoporosis, endocrine disorders, and epidermal disorders. Preferred are treatment of the gastrointestinal tract, including treatment or prevention of diarrhoea; immune system regulation, preferably the treatment or prevention of autoimmune disease and inflammation, maintaining or improving the health of the skin and/or coat system, preferably treating or preventing atopic disease of the skin, treatment or prevention of disorders involving the hypothalamus-pituitary-adrenal (HPA) axis, ameliorating or reducing the effects of aging, including mental awareness and activity levels, and preventing weight loss during and following infection.

### Immune Regulation

The treatment of the disorders disclosed above may be measured using techniques known to those skilled in the art. For example, inflammatory disorders including autoimmune disease and inflammation may be detected and monitored using *in vivo* immune function tests such as lymphocyte blastogenesis, natural killer cell activity, antibody response to vaccines, delayed-type hypersensitivity, and mixtures thereof. Such methods are briefly described herein, but are also well known to those skilled in the art.

1. Lymphocyte blastogenesis: This assay measures the proliferative response *in vitro* of lymphocytes isolated from fresh whole blood of test and control animals to various mitogens and is a measure of overall T- and B-cell function. Briefly, peripheral blood mononucleocytes (PBMC) are isolated from whole blood by Ficoll-Hypaque density centrifugation methods known to those skilled in the art. The isolated PBMCs are washed twice in RPMI 1640 cell media supplemented with HEPES, L-glutamine and penicillin/streptomycin. The washed cells are resuspended in RPMI 1640, counted, and the cell density adjusted appropriately.

The $2 \times 10^5$ cells are exposed to a range of concentrations (0.1 g/ml to 100 g/ml) of various mitogens, some examples of which include pokeweed mitogen (Gibco), phytohaemagglutinin (Gibco) and conconavalin A (Sigma) in triplicate for 72 hours at 37°C and 5% $CO_2$ with 10% foetal bovine serum (Sigma). At 54 hours the cells are pulsed with 1 Ci $^3$H-thymidine, and the cells harvested and scintillation counts read on a TopCount NXT at 72 hours.

2. Natural killer cell activity: As described in U.S. Patent No. 6,310,090, this assay measures the *in vitro* effector activity of natural killer cells isolated from fresh whole blood of test and control animals. Natural killer cells are a component of the innate immune function of a mammal. Canine thyroid adenocarcinoma cells are used as target cells in assessing NK cell cytotoxic activity. This cell line is previously shown to be susceptible to killing by canine NK cell. Target cells are cultured in a T75 flask with 20 mL minimum essential medium (MEM; Sigma Chem. Co., St. Louis, Mo.) supplemented with 10% fetal calf serum (FCS), 100 U/mL of penicillin and 100 g/mL of streptomycin. When confluent, target cells are trypsinized, washed 3 times and resuspended to $5 \times 10^5$ cells/mL in complete medium (RPMI-1640+10% FCS+100 U/mL of penicillin+100 g/mL of streptomycin). Triplicate 100 L aliquots of the target cells are pipetted into 96-well U-bottom plates (Costar, Cambridge, Mass.) and incubated for 8 hours to allow cell adherence. Lymphocytes (effector cells; 100 L) isolated by Ficoll-Hypaque separation (as described above) are then added to the target cells to provide an effector/target cell (E:T) ratio of 10:1. After 10 hours of incubation at 37°C, 20 1 of a substrate containing 5 g of 3-(4,5-dimethylthiazol-2-yl)-2,5-diphenyltetrazolium bromide (MTT) is added. The mixture is incubated for 4 hours at 37°C. after which the unmetabolized MTT is removed by aspiration. The formazan crystals are dissolved by adding 200 L of 95% ethanol. Optical density is measured at 570 nm using a microplate reader. The percentage of NK cell-specific lysis is calculated as follows:

$$\text{Specific Cytotoxicity (\%)} = 100 \times \{1 - [(\text{OD of target cells and effector cells} - \text{OD of effector cells})/(\text{OD of target cells})]\}$$

3. Antibody response to vaccines: The test subjects are given an array (up to 5) of vaccines after at least 12 weeks of probiotic or control feeding. The vaccines may be a mixture of novel and redundant vaccines. Examples of vaccine arrays that may be used include mixtures of vaccines prepared by Fort Dodge Animal Health.

Examples of vaccines suitable for use herein include Canine distemper, adenovirus, coronavirus, parainfluenza, and parvovirus. The test subject's vaccine history will determine the vaccines to be used. The specific antibodies to the vaccines given are measured in blood for 3 weeks and the length and strength of response in control and probiotic feeding groups compared.

4. Delayed-type hypersensitivity: This is an *in vivo*, non-invasive method of assessing immune system status. This test comprises an intradermal injection of the polyclonal mitogen Phytohemmaglutinin (PHA) in combination with sheep red blood cells a multivalent vaccine, histamine (100µL of 0.0275 g/L Histamine Phosphate; Greer, Lenoir, NC), or PBS (100µL of Phosphate Buffered Saline, 8.5 g/L; Sigma). The immune response to the antigen is recorded as skinfold thickness using calipers at time intervals of 0, 24, 48 and 72 hours post-injection. An increase in skinfold thickness is indicative of a greater hypersensitivity response that should be decreased by treatment with the bacteria of the present invention.

Additional methods for determining the effect of the compositions of present invention are described in U.S. Patent Nos. 6,133,323 and 6,310,090.

***Body Composition***

Ameliorating the effects of age may be determined using dual x-ray absorptometry or computed tomography (CT) scan for measuring body composition, including body fat mass, fat-free mass and bone mineral content. Similarly, this method may be used to determine anatomy changes such as weight loss or bone density in subjects following infection.

***Stress Reduction***

The present invention may also be used in a method for reducing disorders associated with over-activity of the hypothalamus-pituitary-adrenal (HPA) axis such as reducing stress levels, including improving mood or reducing depression in pets. Concentrations of blood stress hormones including epinephrine, norepinephrine, dopamine, cortisol and C-reactive protein may be measured to determine stress levels and their reduction or maintenance. These hormones are recognized biomarkers of stress and can be readily measured using techniques known to those skilled in the art. Additionally, since adrenal hypertrophy is a consequence of increased activity of the HPA axis, direct measurement of adrenal size by CT imaging may also be employed. The biochemical and physiological measurements of HPA axis activity may also be accompanied by behavioral assessment to confirm the mammal's mood or level of stress.

***Skin and Coat Health***

Further still, maintenance or improvement of the health of the skin or coat system of pets, including atopic disease of the skin, improving skin barrier function or optimizing the microbial ecology of the skin, may be measured using skin and coat assessments conducted by two trained individuals. Examples of criteria examined during such assessments include:

a) Shedding index: A shedding index is assigned to each test subject by collecting hair produced during a standardized brushing session. The hair is retained and weighed, and control and test subjects compared.
b) Subjective skin/coat evaluations: Trained panelists subjectively evaluate skin and coat condition by assessing shedding, dander, shine, uniformity, softness and density.
c) Skin functional assessment: The barrier function of the skin may be assessed by wiping the skin surface with an acetone-soaked gauze. This technique effectively disrupts the skin barrier by removing single cell layers and associated lipid fractions of the stratum corneum. Barrier disruption is quantified by measuring the increase in transepidermal water loss (TEWL) and the degree of redness of the insulted site using methods known to those skilled in the art. Redness (erythema) scores are obtained using the previously described camera and lighting system. TEWL readings and redness scores are obtained immediately before and after disruption, and at five and 24-hour endpoints to assess the protective and healing properties of skin.

***Gastrointestinal Health***

The use of the present invention to improve intestinal health or treat or prevent intestinal diseases, including diarrhoea and inflammatory bowel disease, in pets may be measured using stool scores. Stools scores may be recorded daily according to the following guidelines and control and test groups compared before and after feeding with the bacteria according to the present invention.

Score: 5 Extremely Dry

This stool is hard and does not stick to surfaces. Stool will roll when pushed. No indentations are made when stool is picked up. Stool is often defecated in groups of individual stools instead of one complete unit. The stool maintains original shape after collection.

Score: 4 Firm (Ideal stool)

This stool is firm, well shaped, and cylindrical. This stool does not break apart easily when picked up. This stool may leave residue on surfaces and gloves. This stool is often defecated as one unit. The stool maintains original shape after collection.

Score: 3 Soft, with shape

This stool is soft, however there are definite shapes. This stool will break apart easily and will definitely leave residue on surfaces and gloves. The stool often loses original shape after collection. This stool is often present with another score but can comprise whole stool sample.

Score: 2 Soft, without shape

This stool is soft and will have no cylindrical shape. The shape often associated with a "2" is a "cow patty" shape. This stool will lose the original shape when collected and will definitely leave residue on surfaces and gloves. This stool score is often present with another score but can comprise the whole stool sample. This stool sample may spread over an area of several inches.

Score: 1 Liquid

This stool score will always resemble liquid and there may or may not be particulate matter present. This stool will often be defecated in groups of piles instead of one complete unit. Mucous is often present with this stool sample. This stool sample is very difficult to collect and residue is always left on surfaces and gloves. This stool sample may spread over an area of several inches.

In addition, other observations are also recorded, including: blood in stool; foreign object in stool; or mucous in stool.

The methods of use of the present invention may be used to reduce the odor of the feces and/or litterbox by reducing the production of compounds in the feces and urine that cause odor. Examples of odor-causing compounds include ammonia, indoles, phenols, amines, branched chain fatty acids, and volatile sulphur-containing compounds. For example, fecal ammonia concentrations can be measured after treating animals with the present invention using the following methods: fresh fecal samples (5.0 g as is) are weighed into plastic vials containing 40 mL 2 $N$ HCl. The samples are stored at 4°C until the end of the sampling period. The samples then are prepared for analysis of $NH_3$ N and lactate. The supernate of such preparation is used for analysis of $NH_3$ N and lactate colorimetrically. Additionally, perceived fecal odor can be scored by humans as follows:

Upon collection of fecal samples, they are scored for odor by trained personnel. Fecal odor score is also based on a 1 to 5 scale with 1 being the least smell and 5 being the most.

Furthermore, the treatment of gastrointestinal infection in pets may comprise improving intestinal microbial ecology of pets. Improving the microbial ecology of pets preferably comprises reducing the levels of pathogenic bacteria in the faeces of pets. The levels of pathogenic bacteria present in the faeces of pets may be enumerated using the standard plate count method known to those skilled in the art. More preferably, the pathogenic bacteria are selected from the group consisting of *Clostridia, Escherichia, Salmonella, Bacteroides, Campylobacter* and mixtures thereof. Examples of suitable strains of pathogenic bacteria include C. *perfringens, C. difficile, Eschericia coli, Salmonella typhimurium* and mixtures thereof.

### *Urinary Tract Health*

Methods of the present invention may also include the treatment, either prophylactic or therapeutic of the urinary tract of animals, preferably pets. Examples of urinary tract treatment include treatment or prevention of urinary tract infections, treatment or prevention of kidney disease, including urinary tract stones, treatment or prevention of bladder infections and the like. Without being bound by theory, it is believed that the present invention is useful in preventing these ailments as a result of their ability to degrade oxalic acid-, struvite- or urate-containing crystals as demonstrated *in vitro.* Oxalic acid is a by-product of urinary metabolism that can form insoluble precipitates that result in kidney, bladder and other urinary tract stone and result in infections. By degrading enteric oxalic acid, and therefore potentially preventing its precipitation and build up in the urinary tract, the present invention may treat and prevent infections and other ailments of the urinary tract. Oxalic acid degradation may be measured *in vitro* using the Oxalic acid test kit cat # 755699 commercially available from Boehringer Mannheim/R-Biopharm and measured in samples of urine by High Performance Liquid Chromotography.

*Nutrient Digestion*

The present invention may be used in a method for improving or maintaining the health of pets comprising improving fiber, fat, protein, vitamin and mineral digestion or absorption (collectively referred to as "nutrient digestion"). Improving fiber digestion is desirable as it promotes the growth of said probiotic bacteria, as well as beneficial endogenous microflora, which aid in the suppression of some potentially pathogenic bacteria. In addition, a decrease in the amount of toxic metabolites and detrimental enzymes that result from colonic fermentation has been documented in humans (Tomomatsu, "Health effects of oligosaccharides", (1994) Food Technol, Vol. 48, pp. 61 - 65). Fiber digestion may be determined using the method described in Vickers et al., "Comparison of fermentation of selected fructooligosaccharides and other fiber substrates by canine colonic microflora", (2001) Am. J. Vet. Res., Vol. 61, No. 4, pp. 609 - 615, with the exception that instead of inoculating using diluted fecal samples each experiment used pure cultures of the bacterial strains of interest.

*Joint Health*

Furthermore, the present invention may be used to treat or prevent joint disorders in pets thereby increasing activity and quality of life of these animals. Examples of joint disorders include compromised mobility, osteoarthritis, rheumatoid arthritis, hip, elbow and knee dysplasia, spondylosis, and post-trauma joint inflammation. For example, dogs with some degree of lameness may be fed the present composition for a total of 90 days and would be examined by a veterinarian at day 0, 30, 60, and 90 days for body weight, body condition score, skin and coat evaluation and an orthopedic evaluation. The orthopedic evaluation will include degree of lameness, weight bearing, resistance to challenged weight bearing, rear leg extension, and visual impact on the dog's ability to walk and trot. Joint angles and range of motion may also be determined by manual goniometric measurements. Additionally, force-plate analysis could be used to determine joint health. Owners complete questionnaires at day 0, 30, 60, and 90 to assess the overall quality of life and perceived joint health of the animal.

In one embodiment, the methods relate to oral administration of a composition described herein directly to a pet. The various embodiments of the composition used in this method, including forms or the composition and levels of various components contained therein, are described in detail herein.

As used herein with respect to the processes of this invention, the terms "orally administering," "oral administration" or the like means that the pet ingests or is directed to ingest one or more compositions described herein, or the owner of such pet is directed to provide one or more compositions to the pet. Wherein the owner is directed to provide, such direction may be that which instructs or informs the owner that use of the composition may or will provide one or more of the benefits described herein, such as treatment of the gastrointestinal tract or other methods of use described herein. Additionally or alternatively, the direction may be that the composition contains live probiotic cultures (including, optionally, direction regarding level of live probiotic cultures that are present or guaranteed). For example, such direction may be oral direction (*e.g.*, through oral instruction from, for example, a veterinarian, other health professional, sales professional or organization, and/or radio or television media (*i.e.,* advertisement) or written direction (*e.g.*, through written direction from, for example, a veterinarian or other health professional (*e.g.*, scripts), sales professional or organization (*e.g.*, through, for example, marketing brochures, pamphlets, or other instructive paraphernalia), written media (*e.g.*, internet, electronic mail, or other computer-related media), and/or containing devices associated with the composition (*e.g.*, a label present on a package containing the composition).

The compositions may be administered in accordance with a variety of frequencies or durations. For example, the compositions are typically administered at least once weekly, or at least three times weekly, or from once daily to four times daily, alternately from once daily to three times daily, alternately from once daily to two times daily, alternately *ad libitum.* In order to achieve the benefits herein, it is preferred that the compositions are administered for at least one week, alternatively at least two weeks, alternatively at least three weeks, alternatively at least four weeks, alternatively at least 6 weeks, alternatively at least eight weeks, or in an unlimited duration.

*Analytical Methods*

The second component herein comprises a probiotic component having a viable probiotic microorganism count of at least $10^5$ CFU / gram of second component. Viable probiotic microorganism count is enumerated in accordance with the following method:

*Sample Reparation*

Into a sterile stomach bag (commercially available from Interscience Laboratories Inc., Weymouth, MA), the sample (second component) for measurement is aseptically weighed and the weight is recorded. The sample is diluted by adding room temperature Butterfield's Phosphate Buffered Dilution Water (Bacteriological Analytical Manual, 8th Edition) until at a 1:10 dilution (meaning, if sample weighs 3 grams, add buffer until the scale reads 30 grams). Allow the sample to soften for 20 to 30 minutes, flatten and break sample into small pieces, then place into a MINIMIX stomacher (commercially available from Interscience Laboratories Inc., Weymouth, MA) 2 minutes at a speed of 9.

*Sample Dilution*

Upon completion of stomaching, 1 milliliter of the mixed sample is transferred into a 9 milliliter dilution tube containing Butterfield's Phosphate Buffered Dilution Water (making a -2 dilution). Serial dilute the sample by transferring 1 milliliter from the -2 dilution into a different 9 milliliter dilution tube (making a -3 dilution). This step is repeated until the desired dilution for plating has been reached. Each tube is vortexed prior to performing the next dilution.

*Sample Plating*

The sample is plated in duplicate on Difco Lactobacilli MRS Agar (DeMan, Rogosa and Sharpe Agar) at -6, -7, and -8 dilutions. To plate the dilution of -8, 0.1 milliliters from the -7 dilution tube is transferred onto a room temperature MRS plate. Appropriate dilutions are repeated, vortexing the tube immediately prior to plating. Samples are spread evenly over the entire surface of the plate, using a sterile spreader. Plates are positioned, inverted, in a 7 liter anaerobic jar (Mitsubishi). An anaerobic indicator (Oxoid) is placed inside the jar. Three AnaeroPack (Mitsubishi) sachets are obtained and opened, with one sachet in one side compartment and two sachets in the other side compartment. The lid is placed on top of the jar and a good seal is ensured. The anaerobic jar is placed in an incubator at 37 °C +/- 2 °C for a 48 hour incubation period.

*Probiotic Microorganism Enumeration*

After incubating for 48 hours, the plates are removed from the incubator and bacterial colonies are counted manually using a Quebec Colony Counter to magnify the colonies. Plates are enumerated in the range of 25 - 250 colonies. Once a raw count (number of colonies counted on the plate) is completed, the dilution is accounted for; therefore, the raw count is multiplied by the reciprocal of the dilution to provide CFU / gram of sample.

EXAMPLES

The following examples are provided to illustrate the invention and are not intended to limit the scope thereof in any manner. The examples are illustrated using a probiotic component, however, such component may be substituted or supplemented with any one or more of yeast, enzymes, antibodies, immunoglobulins, cytokines, and combinations thereof.

*Example 1*

A nutritionally balanced pet food composition comprising a first component and a second component is prepared in accordance with the following:
The first component comprises a plurality of kibbles, wherein each kibble is a nutritionally balanced pet food composition. For example, the first component may be kibbles suitable for adult dogs obtained from The Iams Company, Dayton, OH, U.S.A.
The second component comprises the following individual components at the indicated amounts:

| Component | Amount (by weight percent of second component) |
|---|---|
| Cocoa Butter | 12.2 |
| *Bifidobacterium infantis* | 3 |
| Culturetech 064, commercially available from Foremost | 6.3 |
| Palm Kernel Oil | 6.3 |
| Creamy white coating, commercially available from Blommer | 71.8 |
| Lactic acid powder, commercially available from Purac | 0.4 |

The second component is prepared as follows: 75% (by weight) of the cocoa butter is heated to 100 °C for 1 hour, and then cooled to 40 °C. 50% (by weight) of the *Bifidobacterium infantis* is added to the cocoa butter in a glove box at 10% relative humidity. The Culturetech 064 (heated overnight in an oven at 82 °C), the palm kernel oil (at 121 °C), lactic acid powder (heated overnight in an oven at 82 °C), and creamy white coating (spun-dried overnight at 60 °C) are mixed together at a temperature of 35 °C for 30 minutes to 1 hour to provide a white coating mixture. The remaining cocoa butter and *Bifidobacterium infantis* is comminuted into pieces of 1 - 2 mm in diameter and dispersed through the white coating mixture. The final mixture is cooled to 15 °C to solidify and provided in small pieces suitable for a pet food composition. Prior to use, the second component is stored in aluminum foil bags flushed with nitrogen.

The first component and the second component are provided as a mixture of a plurality of kibbles and a plurality of pieces, respectively, at a weight ratio of 10:1. At time of consumption by a pet, the second component has a viable probiotic microorganism count of 6 x $10^9$ CFU / gram of second component.

*Example 2*

A nutritionally balanced pet food composition comprising a first component and a second component is prepared in accordance with the following:

The first component comprises a plurality of kibbles, wherein each kibble is a nutritionally balanced pet food composition. For example, the first component may be kibbles suitable for adult dogs obtained from The Iams Company, Dayton, OH, U.S.A.

The second component comprises the following individual components at the indicated amounts:

| Component | Amount (by weight percent of second component) |
| --- | --- |
| Milk Fat | 24.4 |
| *Bifidobacterium animalis* | 6 |
| Culturetech 064, commercially available from Foremost | 5.2 |
| Palm Kernel Oil | 5.2 |
| Creamy white coating, commercially available from Blommer | 58.9 |
| Lactic acid powder, commercially available from Purac | 0.3 |

The second component is prepared as follows: 75% (by weight) of the milk fat is heated to 100 °C for 1 hour, and is then cooled to 40 °C. 50% (by weight) of the *Bifidobacterium animalis* is added to the milk fat in a glove box at 10% relative humidity. The Culturetech 064 (heated overnight in an oven at 82 °C), the palm kernel oil (at 121 °C), lactic acid powder (heated overnight in an oven at 82 °C), and creamy white coating (spun-dried overnight at 60 °C) are mixed together at a temperature of 35 °C for 30 minutes to 1 hour to provide a white coating mixture. The remaining milk fat and *Bifidobacterium animalis* is comminuted into pieces of 1 - 2 mm in diameter and dispersed through the white coating mixture. The final mixture is cooled to 15 °C to solidify and provided in small pieces suitable for a pet food composition. Prior to use, the second component is stored in aluminum foil bags flushed with nitrogen.

The first component and the second component are provided at a weight ratio of 7:1. The first component is contained within a large canister labeled with information that "live and active probiotics" are contained in the composition (including, optionally, states regarding level of live cultures in the composition or portions of the composition); the second component is contained within a smaller canister wherein the filled smaller canister is placed within the filled large canister prior to commercial sale. At time of consumption by the pet, the consumer removes the filled smaller canister, fills a bowl with the desired or recommended amount of first component obtained from the filled large canister and adds the desired or recommended amount of second component obtained from the filled smaller canister. At time of consumption by a pet, the second component has a viable probiotic microorganism count of 4 x $10^9$ CFU / gram of second component.

*Example 3*

A nutritionally balanced pet food composition comprising a first component and a second component is prepared in accordance with the following:

The first component comprises a plurality of kibbles, wherein each kibble is a nutritionally balanced pet food composition. For example, the first component may be kibbles suitable for adult dogs obtained from The Iams Company, Dayton, OH, U.S.A.

The second component comprises the following individual components at the indicated amounts:

| Component | Amount (by weight percent of second component) |
|---|---|
| Cocoa Butter | 3.8 |
| *Bifidobacterium infantis* | 1 |
| Sorbitol (70% solution in water) | 95.2 |

The cocoa butter is heated to a temperature of 100 °C for 1 hour, and then cooled to 40 °C. The probiotic microorganism is added to the cocoa butter in a glove box at 10% relative humidity. The sorbitol is heated to 204 °C, then cooled to 49 °C at 12% relative humidity. The sorbitol is mixed with the cocoa butter and probiotic microorganism mixture to provide a uniformly distributed material. This material is poured into a plurality of molds of desirable shape and size and allowed to further cool. The first component and the second component are provided at a weight ratio of 7:1. The first component is contained within a large canister; discrete pieces (from molds) of the second component are contained within a blister pack wherein the filled blister pack is physically associated with the large canister at time of commercial sale. At time of consumption by the pet, the consumer fills a bowl with the desired or recommended amount of first component obtained from the filled large canister and adds the desired or recommended amount of second component obtained from the filled blister pack. At time of consumption by a pet, the second component has a viable probiotic microorganism count of 8 x $10^7$ CFU / gram of second component.

*Example 4*

A nutritionally balanced pet food composition comprising a first component and a second component is prepared in accordance with the following:

The first component comprises a plurality of kibbles, wherein each kibble is a nutritionally balanced pet food composition. For example, the first component may be kibbles suitable for adult dogs obtained from The Iams Company, Dayton, OH, U.S.A.

The second component comprises the following individual components at the indicated amounts:

| Component | Amount (by weight percent of second component) |
|---|---|
| Cocoa Butter | 3.8 |
| *Bifidobacterium infantis* | 0.9 |
| Sorbitol (70% solution in water) | 93.7 |
| Anhydrous Citric Acid | 1.3 |
| Raspberry Flavor | 0.2 |
| FD&C Red Food Coloring | 0.1 |

The second component is prepared as follows: 75% (by weight) of the cocoa butter is heated to 100 °C for 1 hour, then cooled to 40 °C. 50% (by weight) of the *Bifidobacterium infantis* is added to the cocoa butter in a glove box at 10% relative humidity. The sorbitol is heated to 204 °C and is then cooled to 49 °C at 12% relative humidity. The mixture of cocoa butter and *Bifidobacterium infantis*, the citric acid, the raspberry flavor, and the food coloring is mixed with the sorbitol to provide a uniformly distributed material. This material is poured into a plurality of molds of desirable shape and size and allowed to further cool. Prior to use, the second component is stored in aluminum foil bags flushed with nitrogen.

The first component and the second component are provided as a mixture of a plurality of kibbles and a plurality of pieces, respectively, at a weight ratio of 10:1.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

**Claims**

1. A pet food composition comprising: a first component comprising a source of protein, a source of fat, and a source of carbohydrate; and a second component, physically distinct from the first component; and wherein the first component is at least partially extruded and wherein the second component has water activity of 0.2 or less; and wherein the second component comprises a biologic selected from the group consisting of a probiotic component having a viable probiotic microorganism count of at least $10^5$ CFU /gram of second component; yeast; enzymes; antibodies; immunoglobulins; cytokines; and combinations thereof and wherein the first component is provided as a plurality of discrete masses and the second component is provided as a plurality of discrete masses.

2. The pet food composition according to Claim 1 wherein the first component further comprises a source of supplemental fiber and the second component comprises a component selected from the group consisting of a lipid component, a sweetener component, and combinations thereof.

3. The pet food composition according to any preceding Claims, wherein the biologic comprises the probiotic component having a viable probiotic microorganism count of at least $10^5$ CFU / gram of second component; preferably a viable probiotic microorganism count of from $10^5$ to $10^{12}$ CFU / gram of second component.

4. The pet food composition according to any preceding Claims, wherein the probiotic component comprises a genera selected from the group consisting of *Bacillus, Bacteroides, Bifidobacterium, Enterococcus, Lactobacillus,* and *Leuconostoc,* and combinations thereof, and preferably wherein the probiotic component comprises *Bifidobacterium*.

5. The pet food composition according to any preceding Claims, wherein the second component further comprises a prebiotic.

6. The pet food composition according to any of the preceding Claims, wherein the first component and the second component are present at a ratio of at least 2:1, by weight, preferably wherein the first component and the second component are present at a ratio of at least 5:1, by weight and more preferably wherein the first component and the second component are present at a ratio of at least 10:1, by weight.

7. The pet food composition according to any of the preceding Claims, which is a nutritionally balanced pet food composition.

8. The pet food composition according to any one the preceding Claims, wherein the pet food is provided as a mixture if the first component as kibbles and second component as pellets.

9. The use of a pet food composition as claimed in any preceding Claims for manufacturing a medicament for the enhancement of health in a pet, wherein the enhancement of health is selected from the group consisting of treatment of diseases of the immune system, treatment of diseases of the gastrointestinal system, treatment of diseases of skin or coat, treatment of stress, enhancement of gastrointestinal health and combinations thereof.

10. The use according to Claim 9, wherein the enhancement of health comprises an oral administration of the medicament, wherein the oral administration is from once daily to four times a daily; preferably at least once weekly; more preferably at least once monthly.

Europäisches
Patentamt

European
Patent Office

Office européen
des brevets

**EUROPEAN SEARCH REPORT**

Application Number

EP 10 15 4060

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 344 458 A1 (NESTLE SA [CH]) 17 September 2003 (2003-09-17) * paragraphs [0001], [0007], [0013], [0021], [0029], [0040] - [0041], [0055] - [0057], [0081] - [83112] * * example 1 * * claims 1,2,6,11,14 * | 1-10 | INV. A23K1/16 A23K1/18 A23K1/00 |
| X | WO 03/070019 A1 (NESTLE SA [CH]; BRETON LIONEL [FR]; BUREAU-FRANZ ISABELLE [CH]) 28 August 2003 (2003-08-28) | 1,3,4,6, 7,9,10 | |
| A | * example 1 * * page 7, lines 7-12 * * page 5, lines 11-13 * * page 4, lines 10-29 * | 2,5,8 | |
| A,P | US 2005/276882 A1 (BISHOP WILLIAM W) 15 December 2005 (2005-12-15) * paragraphs [0001], [0005] - [0011], [0016], [0017], [0025], [0028], [0029] * * table 1 * * claim 18 * | 1-10 | |
| A,D | US 6 254 910 B1 (PALUCH LAURA) 3 July 2001 (2001-07-03) * the whole document * | 1-10 | TECHNICAL FIELDS SEARCHED (IPC) A23K A23L |
| A | US 5 968 569 A (CAVADINI ET AL) 19 October 1999 (1999-10-19) * column 1, lines 5-13,64-67 * * column 2, lines 15-31 * * column 3, line 47 - column 4, line 11 * * column 5, lines 1-35 * * column 6, lines 8-11,58-67 * | 1-10 | |

-/--

The present search report has been drawn up for all claims

| Place of search | Date of completion of the search | Examiner |
|---|---|---|
| Munich | 8 April 2010 | Couzy, François |

Europäisches
Patentamt

European
Patent Office

Office européen
des brevets

# EUROPEAN SEARCH REPORT

Application Number

EP 10 15 4060

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2003/026876 A1 (ALBUJA MARIO ET AL) 6 February 2003 (2003-02-06) * paragraphs [0008] - [0015], [0022], [0065], [0086], [0087], [0090] * ----- | 1-10 | |
| A | US 5 643 623 A (SCHMITZ ET AL) 1 July 1997 (1997-07-01) * column 1, lines 5-13 * * column 2, line 60 - column 3, line 14 * * column 4, lines 55-61 * * column 5, lines 8-65 * ----- | 1-10 | |
| A | US 2003/194423 A1 (TORNEY ALLAN A ET AL) 16 October 2003 (2003-10-16) * paragraphs [0006], [0012], [0013], [0018] - [0020], [0022], [0025], [0042], [0061], [0062], [0078], [0085] * ----- | 1-10 | |

TECHNICAL FIELDS
SEARCHED    (IPC)

The present search report has been drawn up for all claims

| Place of search | Date of completion of the search | Examiner |
|---|---|---|
| Munich | 8 April 2010 | Couzy, François |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 15 4060

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2010

| Patent document cited in search report | | Publication date | Patent family member(s) | | Publication date |
|---|---|---|---|---|---|
| EP 1344458 | A1 | 17-09-2003 | AU 2003218748 A1 | | 22-09-2003 |
| | | | BR 0308586 A | | 11-01-2005 |
| | | | CA 2478553 A1 | | 18-09-2003 |
| | | | CN 1642437 A | | 20-07-2005 |
| | | | DE 60307993 T2 | | 22-02-2007 |
| | | | WO 03075676 A1 | | 18-09-2003 |
| | | | ES 2269993 T3 | | 01-04-2007 |
| | | | JP 2005519600 T | | 07-07-2005 |
| | | | MX PA04008814 A | | 08-09-2005 |
| | | | RU 2323586 C2 | | 10-05-2008 |
| | | | US 2005153018 A1 | | 14-07-2005 |
| | | | ZA 200408199 A | | 11-10-2005 |
| WO 03070019 | A1 | 28-08-2003 | AU 2003210311 A1 | | 09-09-2003 |
| | | | BR 0307840 A | | 07-12-2004 |
| | | | CA 2476619 A1 | | 28-08-2003 |
| | | | CN 1633243 A | | 29-06-2005 |
| | | | JP 2005517419 T | | 16-06-2005 |
| | | | MX PA04008187 A | | 26-11-2004 |
| | | | RU 2334404 C2 | | 27-09-2008 |
| | | | US 2009104169 A1 | | 23-04-2009 |
| | | | US 2005158291 A1 | | 21-07-2005 |
| | | | ZA 200407552 A | | 12-10-2005 |
| US 2005276882 | A1 | 15-12-2005 | NONE | | |
| US 6254910 | B1 | 03-07-2001 | AT 254404 T | | 15-12-2003 |
| | | | AU 747964 B2 | | 30-05-2002 |
| | | | AU 2904699 A | | 11-10-1999 |
| | | | BR 9908877 A | | 02-10-2001 |
| | | | CA 2324013 A1 | | 23-09-1999 |
| | | | CN 1301134 A | | 27-06-2001 |
| | | | DE 69912934 D1 | | 24-12-2003 |
| | | | DE 69912934 T2 | | 02-09-2004 |
| | | | DK 1063897 T3 | | 29-03-2004 |
| | | | EP 1063897 A1 | | 03-01-2001 |
| | | | ES 2212538 T3 | | 16-07-2004 |
| | | | JP 2002506620 T | | 05-03-2002 |
| | | | JP 2003102390 A | | 08-04-2003 |
| | | | JP 2007020580 A | | 01-02-2007 |
| | | | JP 2009112313 A | | 28-05-2009 |
| | | | PT 1063897 E | | 30-04-2004 |
| | | | RU 2234840 C2 | | 27-08-2004 |
| | | | TW 580370 B | | 21-03-2004 |
| | | | US 6117477 A | | 12-09-2000 |
| | | | WO 9947000 A1 | | 23-09-1999 |

For more details about this annex : see Official Journal of the European Patent Office, No. 12/82

EPO FORM P0459

## ANNEX TO THE EUROPEAN SEARCH REPORT
## ON EUROPEAN PATENT APPLICATION NO.

EP 10 15 4060

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2010

| Patent document cited in search report | | Publication date | Patent family member(s) | | Publication date |
|---|---|---|---|---|---|
| US 5968569 | A | 19-10-1999 | AT | 206873 T | 15-11-2001 |
| | | | AU | 740761 B2 | 15-11-2001 |
| | | | AU | 5040598 A | 16-07-1998 |
| | | | BR | 9800271 A | 29-06-1999 |
| | | | CA | 2222758 A1 | 09-07-1998 |
| | | | CN | 1192330 A | 09-09-1998 |
| | | | DE | 29724815 U1 | 22-07-2004 |
| | | | DE | 29724816 U1 | 22-07-2004 |
| | | | DE | 69707413 D1 | 22-11-2001 |
| | | | DE | 69707413 T2 | 16-05-2002 |
| | | | DK | 0862863 T3 | 04-02-2002 |
| | | | EP | 0862863 A2 | 09-09-1998 |
| | | | ES | 2164299 T3 | 16-02-2002 |
| | | | JP | 4308337 B2 | 05-08-2009 |
| | | | JP | 10191916 A | 28-07-1998 |
| | | | NZ | 329464 A | 28-01-2000 |
| | | | PT | 862863 E | 29-04-2002 |
| US 2003026876 | A1 | 06-02-2003 | US | 2003026875 A1 | 06-02-2003 |
| | | | ZA | 200401597 A | 10-03-2005 |
| US 5643623 | A | 01-07-1997 | AT | 236538 T | 15-04-2003 |
| | | | AU | 725019 B2 | 05-10-2000 |
| | | | AU | 5880696 A | 30-12-1996 |
| | | | DE | 69627327 D1 | 15-05-2003 |
| | | | DE | 69627327 T2 | 11-12-2003 |
| | | | EP | 0831726 A1 | 01-04-1998 |
| | | | JP | 11506925 T | 22-06-1999 |
| | | | PL | 324969 A1 | 22-06-1998 |
| | | | WO | 9639869 A1 | 19-12-1996 |
| | | | US | 5834044 A | 10-11-1998 |
| US 2003194423 | A1 | 16-10-2003 | AU | 2003230958 A1 | 03-11-2003 |
| | | | EP | 1496755 A1 | 19-01-2005 |
| | | | JP | 2005522230 T | 28-07-2005 |
| | | | WO | 03088764 A1 | 30-10-2003 |

EPO FORM P0459

For more details about this annex : see Official Journal of the European Patent Office, No. 12/82

**EP 2 191 732 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050276882 A
- US 6254910 B
- US 5968569 A
- US 20030026876 A
- EP 0850569 A
- WO 03075676 A
- WO 0042168 A
- WO 9835014 A
- US 6310090 B
- US 6133323 A

**Non-patent literature cited in the description**

- **Sunvold et al.** *J. Anim. Sci.,* 1995, vol. 73, 1099-1109
- **Tomomatsu.** Health effects of oligosaccharides. *Food Technol,* 1994, vol. 48, 61-65
- **Vickers et al.** Comparison of fermentation of selected fructooligosaccharides and other fiber substrates by canine colonic microflora. *Am. J. Vet. Res.,* 2001, vol. 61 (4), 609-615

**21**